# FASCICULE DE BREVET EUROPEEN

(11) **EP 0 615 838 B1**
(45) Date de publication et mention de la délivrance du brevet: **13.06.2001**
(21) Numéro de dépôt: 94810057.3
(22) Date de dépôt: 03.02.1994
(51) Int. Cl.: B32B 27/10, B32B 7/12, G09F 3/02

(54) **Produit composite stratifié**
Laminiertes Verbundwerkstoffprodukt
Laminated composite product

(30) Priorité: 12.02.1993 CH 44093
(43) Date de publication de la demande: 21.09.1994
(73) Titulaire: COFRADEC S.A., F-59530 Le Quesnoy (FR)
(72) Inventeur: Dupont, Guy, B-7050 Jurbise (BE)
(74) Mandataire: AMMANN INGENIEURS-CONSEILS EN PROPRIETE INTELLECTUELLE SA BERNE

(56) Documents cités:
- EP-A- 0 049 483
- DE-A- 4 003 106
- DE-A- 4 102 914
- FR-A- 2 023 158
- GB-A- 1 585 903
- US-A- 2 300 787
- DATABASE WPI Derwent Publications Ltd., London, GB; AN 92-402652 (49) & JP-A-4 299 381 (TOPPAN PRINTING CO. LTD.) 22 Octobre 1992
- DATABASE WPI Week 9245, Derwent Publications Ltd., London, GB; AN 92-369574 (45) & JP-A-4 270 644 (DAINIPPON PRINTING CO. LTD.) 28 Septembre 1992

## Description

La présente invention concerne un produit composite stratifié selon le préambule de la revendication 1.

Il est naturellement bien connu, par exemple du document EP-A-0'049'483, de réunir deux objets solides par une couche de liaison, chaque collage formant un tel produit composite stratifié. Le but de cette action est de réunir deux corps ou objets de façon durable si l'on fait abstraction de cas spéciaux tels que quelques sortes d'étiquettes autocollantes.

En ce qui concerne les étiquettes sur les récipients à récupérer et/ou à recycler, en particulier les étiquettes en papier sur les bouteilles en verre, il est d'usage de les coller sur la bouteille à l'aide d'une colle qui, sans être hydrosoluble, ramollit sous l'action de l'eau, par exemple une colle caséine/latex. La séparation de telles étiquettes de la bouteille, lorsqu'elle est lavée à l'eau chaude ou tiède contenant de la soude et un agent tensio-actif, ne pose généralement pas de problèmes. Cependant, cette séparation devient extrèmement lente, sinon impossible, lorsqu'on utilise des étiquettes en papier revêtues d'un vernis qui donne de la brillance aux étiquettes. Ces étiquettes sont à présent de plus en plus préférées et utilisées car la brillance d'une étiquette est plus attrayante. Cette difficulté de séparation est due au fait que, contrairement à une étiquette "normale" qui est facilement perméable à l'eau, une étiquette vernie ne l'est pas car le vernis, ayant pénétré dans la surface de l'étiquette, l'a rendue imperméable, et l'eau effectuant la séparation ne peut entrer entre étiquette et bouteille que par l'interstice minuscule entre l'étiquette et la surface de la bouteille.

D'un autre côté, pour s'assurer p. ex. qu'une étiquette ne se détache pas dans un environnement humide, ou qu'un emballage collé ne s'ouvre pas, on connaît l'utilisation d'une colle de type hot-melt pour fixer l'étiquette à un objet, ou une feuille d'emballage sur l'objet à emballer et/ou sur elle même.

Un but de l'invention est de créer une matière stratifiée thermocollable pouvant se désintégrer au contact avec de l'eau chaude.

Il a été trouvé que ces buts peuvent être atteints par le produit composite stratifié selon l'invention qui est défini dans les revendications indépendantes, des exécutions particulières faisant l'objet de revendications dépendantes.

La couche de liaison mentionnée dans les revendications peut être composée de toute matière filmogène bien hydrosoluble présentant une adhésion suffisante aux deux surfaces entre lesquelles elle est appliquée. Le terme "hydrosoluble" s'étend, bien entendu, à l'eau mais aussi à des solutions aqueuses telles qu'acides, bases, sels et composés organiques aqueux. La couche de liaison n'a pas besoin d'être soluble dans chacune des solutions mentionnées mais dans au moins une d'elles.

La matière de la couche de liaison peut être choisie parmi les classes de compositions filmogènes et hydrosolubles suivantes:
- polyols filmogènes tels que l'alcool polyvinylique (PVA) ou un copolymère d'éthylène et d'alcool vinylique (EVOH);
- gommes végétales telles que la gomme arabique, la gomme de guar, les pectines;
- colles naturelles telles que la colle à l'amidon, la colle à la caséine et la colle à la gélatine.

Cette liste n'est pas exhaustive. Tout mélange comprenant deux ou plusieurs de ces matières peut également entrer en ligne de compte.

La couche de liaison peut contenir des additifs afin de la rendre encore plus appropriée pour remplir son but, par exemple des agents augmentant ou diminuant l'adhésion, des charges solides, des colorants, des pigments, des bulles de gaz, des substances dégageant des gaz lorqu'elles entrent en contact avec de l'eau (pour faciliter la séparation). Cette liste n'est pas exhaustive.

Selon l'invention, la couche de liaison n'a pas besoin de se présenter sous la forme d'une couche continue. Il est souvent suffisant d'appliquer la couche par petits points rapprochés, par exemple au moyen d'un cylindre d'application à gravure tramée tel qu'un cylindre d'impression par héliogravure.

L'épaisseur de la couche de liaison sera adaptée au but recherché et en fonction des exigences qu'elle doit remplir et des matières dont elle est composée. Cette épaisseur se situe en général entre 10 et 1000 µm. Dans des cas spéciaux, des épaisseurs plus grandes et plus petites peuvent entrer en ligne de compte; il est évident qu'on ne choisit pas une couche inutilement épaisse.

On préfère l'utilisation d'un ou plusieurs représentants du groupe des alcools polyvinyliques (PVA) comme matière seule ou prépondérante de la couche de liaison. L'alcool polyvinylique est une matière bien adaptée à l'utilisation dans le cadre de la présente invention; le PVA est une matière peu coûteuse, très hydrosoluble, incolore, inodore, bien filmogène, présentant une bonne adhérence à beaucoup de matériaux, et il n'est pas toxique. Les alcools polyvinyliques sont des matières synthétiques bien connues et peuvent être obtenus par hydrolyse d'esters de polyvinyle tel que l'acétate de polyvinyle. Le degré d'hydrolyse varie généralement entre 87 et 99 %, selon les propriétés désirées. Les sortes presque totalement hydrolysées ont la meilleure solubilité en milieu aqueux; leur point de fusion se situe vers 228 °C avec jaunissement et décomposition. Cependant, de telles températures ne sont pas rencontrées ni lors de l'application du PVA ni au cours de la séparation pour recyclage.

Dans le cas le plus général, la couche de liaison doit réunir par adhésion un objet quelconque solide ayant au moins une surface plane, avec au moins un second objet solide, identique ou non au premier objet et ayant également une surface plane, les deux dites surfaces étant en regard l'une à l'autre. Les deux surfaces réunies au moyen de la couche de liaison doivent de préférence être parallèles l'une à l'autre afin que l'épaisseur de la couche de liaison entre elles soit substantiellement uniforme. La liaison est prévue d'être temporaire dans le sens qu'elle est facilement rompue par l'action de l'eau sur le produit composite stratifié de l'invention. Il est préféré que l'un au moins des objets soit une matière bidimensionnelle, à savoir une matière dont l'épaisseur est de plusieurs ordres de grandeur plus petite que la largeur et la longueur, par exemple le papier, le carton, les films métalliques ou de matière plastique et les textiles. Il n'est pas nécessaire que le second objet et, éventuellement, les autres objets aient des surfaces continues; ils peuvent par exemple former une couche d'impression discontinue. On préfère les objets à surface lisse; cependant, une surface rugueuse peut être tolérée à condition que la rugosité ne dépasse en général pas l'épaisseur désirée ou nécessaire de la couche de liaison.

Dans la description qui suit, on décrira différents systèmes d'application pratique de l'invention. Cependant, ce ne sont que quelques exemples choisis qui ne limiteront pas la présente invention à ces modes de mise en oeuvre. On se référera dans ce qui suit, au dessin dans lequel:
- la Fig. 1 est une coupe transversale d'une première exécution d'un produit composite connu, représentant le cas général;
- la Fig. 2 est une coupe transversale d'une seconde exécution d'un produit connu, représentant une bouteille en verre ou un gobelet en matière plastique, portant une étiquette ou une banderole en papier imprimé et verni;
- la Fig. 3 est une coupe transversale d'une troisième exécution d'un produit composite stratifié, connu également, représentant par exemple une bande de produit composite pouvant servir de matière de base pour étiquettes;
- la Fig. 4 est une coupe transversale d'une première réalisation du produit stratifié composite de l'invention, utilisable par exemple pour étiquettes ayant une surface brillante;
- la Fig. 5 montre, en coupe transversale également, un second, troisième et quatrième modes d'exécution du produit composite stratifié de l'invention dont les représentations sont réunies, utilisables comme feuilles thermoscellables; et
- la Fig. 6 est une coupe transversale d'une cinquième et sixième réalisations du produit composite stratifié de l'invention, également utilisables comme feuilles d'emballage.

Dans toutes les Figures, les coupes ne sont pas à l'échelle dans le sens que l'épaisseur des différentes couches est exagérée par rapport aux autres dimensions, afin qu'on puisse bien voir la construction des produits composites stratifiés de l'invention.

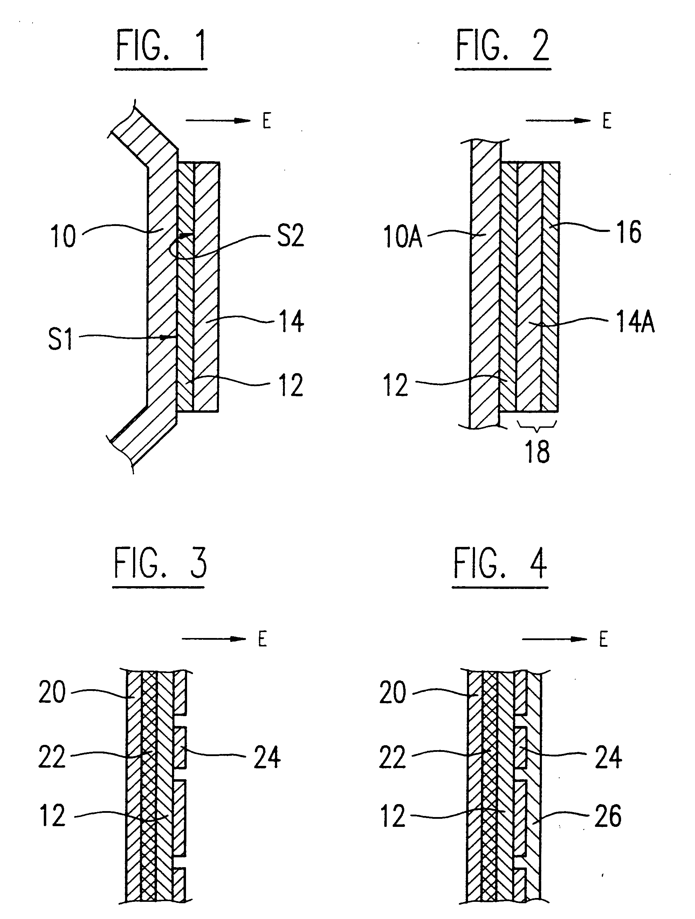

Dans la Fig. 1, on a représenté le cas le plus général d'un produit composite stratifié. Un objet solide quelconque 10, par exemple un récipient en verre, comporte une surface plane S1. Cette surface comporte un revêtement 12 faisant la couche de liaison et ayant les caractéristiques définies ci-dessus, et cette couche de liaison 12 est recouverte d'un second objet 14 ayant une surface de contact S2, par exemple un film en matière plastique ou une feuille de papier ou de métal. La flèche E indique l'extérieur de l'objet 10 et de tout l'ensemble.

On peut obtenir le produit composite stratifié en appliquant la couche la de liaison sur l'une ou l'autre des surfaces S1, S2, ou bien sur les deux, les deux objets étant alors réunis. La couche de liaison a la résistance mécanique et thermique nécessaire mais cède rapidement à l'action d'un milieu aqueux tiède ou chaud, les deux objets 10, 14 se séparant alors.

La Fig. 2 montre une coupe transversale partielle d'une seconde exécution du produit composite stratifié, représentant par exemple un gobelet de yaourt dont la paroi porte le numéro de référence 10A. Une étiquette 18 est collée sur l'extérieur de la paroi 10A par la couche de liaison 12. L'étiquette 18 est composée d'une bande en papier 14A revêtue vers l'extérieur E d'une couche d'alcool polyvinylique 16.

La Fig. 3 montre une coupe transversale (partielle) d'une troisième exécution connue du produit composite stratifié, représentant par exemple une bande de produit composite servant, après découpage, d'étiquettes.

Ce produit se compose d'une bande de papier 22 revêtue d'une couche 20 de colle, cette couche 20 étant destinée à être fixée sur un récipient (non représenté). L'autre surface de la bande de papier 22 est munie d'une couche 12 en PVA, imprimée elle-même par une couche d'impression 24.

Après collage sur un récipient et lors du procédé de traitement à la soude aqueuse diluée et chaude, l'eau attaque d'abord la couche supérieure 12, et la couche d'impression est rapidement enlevée. L'eau pénètre ensuite dans le papier de l'étiquette mis à nu, et l'étiquette est rapidement, souvent trop rapidement, séparée elle-même du récipient. Cependant, avant l'utilisation, la couche d'impression 24 se sépare facilement de la couche supérieure 12 sous l'influence de l'humidité ou de l'eau.

La Fig. 4 est une coupe transversale schématique (partielle) d'un produit composite stratifié plus complexe que les produits connus mais répondant déjà mieux aux exigences actuelles du public. Ce produit, utilisable comme étiquette, se compose de cinq couches qui sont les suivantes, de gauche à droite et de l'intérieur vers l'extérieur (voir la flèche E): - Une couche de colle de caséine (ou d'autre colle hydrosoluble) 20; une bande de papier 22; une couche de liaison (par exemple en PVA) 12, une couche d'impression 24 comme décrit ci-dessus, et finalement un enduit de vernis 26 qui donne du brillant aux étiquettes fabriquées à partir du produit selon l'invention.

Le vernis formant la couche 26 peut être un vernis quelconque utilisé dans la fabrication d'étiquettes ayant un aspect esthétique et agréable. Il s'agit d'un vernis de préférence non hydrosoluble, brillant ou non, thermoscellable ou non, incolore ou coloré, formant une couche continue ou discontinue. La couche de vernis peut être constituée par un produit qui a été réticulé par l'action de rayons énergétiques, par exemple de rayons ultraviolets.

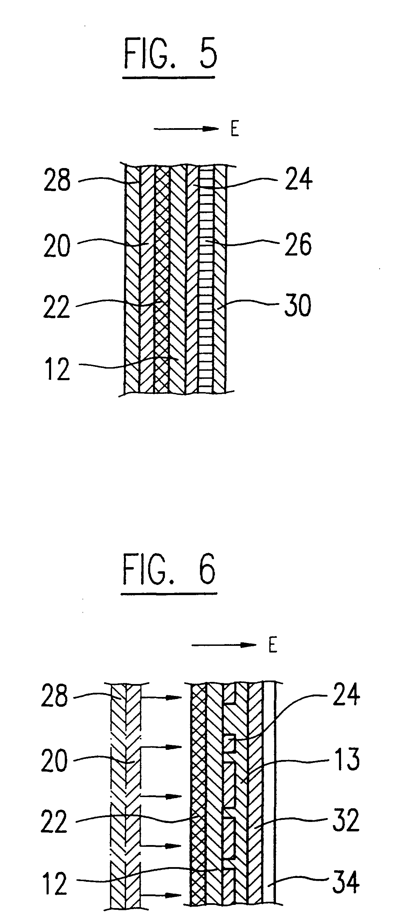

Trois réalisations du produit stratifié selon l'invention sont représentées en coupe transversale partielle à la Fig. 5. Il s'agit de la représentation combinée d'exemples constitués par des feuilles d'emballage complexes assurant une protection parfaite des produits ou articles emballés tout en présentant un aspect esthétique très agréable.

La première exécution dont la représentation est comprise dans la Fig. 5, est basée sur la présence d'une bande de papier 22, déjà décrite ci-dessus, qui est recouverte d'une couche de colle à la caséine/latex 20, également déjà décrite en relation avec l'exécution selon la Fig 4. Cette couche de colle 20 est à son tour recouverte par une couche additionnelle 28, constituée d'un matériau hot melt, c'est-à-dire un produit thermofusible ou de thermocolle qui est couramment utilisé dans la technique de l'emballage pour coller deux matériaux l'un avec l'autre par l'action de la chaleur. Cette couche 28 peut également être une laque ayant les propriétés requises pour coller la couche 28 sur un récipient, ou sur elle-même après un pliage approprié.

Sur l'autre face (libre) de la feuille ou bande de papier 22, on a appliqué comme dans les autres exemples la couche de liaison 12 selon l'invention, et cette couche 12 est pourvue d'une impression comme décrit ci-dessus, la couche d'impression étant désignée par la référence 24, voir la description donnée.

Cette première exécution constitue une feuille de base d'emballage thermocollable et facilement séparable pour le recyclage grâce à la couche de liaison 12.

Evidemment, ce produit stratifié peut aussi être collé sur un objet quelconque et ainsi être utilisé comme étiquette.

Une seconde réalisation du produit stratifié composite selon l'invention, également représentée à la Fig. 5, se distingue de la première exécution qui vient d'être décrite, par la présence d'une couche additionnelle 26, à savoir une couche d'un vernis protégeant la couche d'impression 24. Ce vernis peut être n'importe quel vernis couramment utilisé pour protéger l'impression et/ou pour lui donner du brillant ou tout autre aspect désiré. Le vernis peut être hydrosoluble mais on utilise en général des vernis insolubles protégeant l'impression contre l'eau également.

La troisième exécution représentée à la Fig. 5 est constituée par une feuille d'emballage apte à être thermocollée sur elle-même. De telles feuilles ont des utilités très diverses; elle peuvent servir à emballer tout produit de consommation, tel que du savon ou des serviettes de toilette humides, et, si le matériau de la couche en surface est choisi pour respecter les normes alimentaires, également pour emballer des aliments tels que nourriture pour animaux domestiques et pour l'homme, comme le café, les produits de charcuterie et les biscuits. La feuille servira aussi d'emballage secondaire recouvrant des boîtes en carton.

Cette troisième exécution se base sur la seconde, décrite ci-dessus, et la couche de vernis de protection 26 est recouverte d'une couche de laque 30. Cette dernière couche 30 est en un matériau thermoscellable sur la couche 28, par exemple un hot melt ou toute autre composition ayant une affinité adhésive à la couche 28. Il suffit dans la plupart des cas que la couche de laque 30 soit appliquée en zones ou par endroits seulement.

Une réalisation supplémentaire du produit stratifié composite selon l'invention est représentée à la Fig. 6. C'est un produit composite stratifié comprenant les couches successives, de l'intérieur vers l'extérieur en commençant par le substrat 22, (voir la flèche E), 22, 12, 24, 13, 32 et 34. La couche 22 est une feuille ou bande en papier, plastique, métal ou textile. La couche 12 est une couche de liaison en PVA ou toute autre matière filmogène et hydrosoluble comme définie ci-dessus. La couche 24 est la couche d'impression, égalementdécriteci-dessus. La couche 13 comprend une matière répondant à la définition de celle qui constitue la couche 12; ces deux matières peuvent être identiques ou différentes. La couche 32 est une couche de colle, généralement non hydrosoluble, faisant la liaison entre les couches 13 et 34, et la couche 34 finalement est une mince couche transparente en film de matière plastique telle que polyoléfine comme PE ou PP, polyester, dérivés de cellulose, et leurs mélanges ou copolymères, cette matière plastique pouvant être réticulable ou non.

La seconde réalisation faisant partie de la Fig. 6 est constituée par le produit composite stratifié qui vient d'être décrit et deux couches supplémentaires 28 et 20 représentées en traits pointillés. Ces deux couches supplémentaires 28 et 20 donnent au produit composite décrit l'aptitude de thermoscellage; elles sont en tout point identiques aux couches 28 et 20 représentées à la Fig. 5 et décrites en détail ci-dessus.

Cette réalisation est utilisable comme feuille d'emballage de qualité élevée, par exemple pour suremballage, emballage de présentation ou pour grouper plusieurs paquets individuels.

Grâce à la présence d'une ou plusieurs couches de liaison bien hydrosolubles en PVA ou matériau similaire, tous les produits composites stratifiés selon l'invention sont facilement séparés lors d'un traitement par un milieu aqueux pour procéder à la récupération et recyclage des produits.

## Revendications

1. Produit composite stratifié comprenant au moins un substrat bidimensionnel continu et une couche de liaison en une matière filmogène hydrosoluble pour faire adhérer le substrat à un corps solide, caractérisé en ce qu'il comprend les couches liées suivantes, énumérées de l'intérieur à l'extérieur:
- une couche de composition de hot melt (28),
- une couche de colle (20) hydrosoluble,
- une feuille ou bande de papier (22), qui constitue le substrat,
- la couche de liaison hydrosoluble (12), et
- une couche d'impression (24), correspondant au corps solide,
afin que ce produit soit désintégrable par l'interaction de l'eau.

2. Produit selon la revendication 1, caractérisé en ce que la couche de colle est composée d'une colle à la caséine/latex ou d'une colle de caséine.

3. Produit selon la revendication 1 ou 2, caractérisé en ce que la couche d'impression est recouverte d'une couche de vernis de protection (26).

4. Produit selon la revendication 1 ou 2, caractérisé en ce que la couche d'impression est recouverte par les couches suivantes:
- une seconde couche de liaison hydrosoluble (13)
- une couche intermédiaire d'adhésion (32), et
- un film transparent (34) en matière polymère.

5. Produit selon la revendication 4, caractérisé en ce que la couche intermédiaire d'adhésion (32) est non hydrosoluble.

6. Utilisation du produit selon une des revendications 1 à 5 comme étiquette désintégrable par l'interaction de l'eau.

7. Utilisation du produit selon une des revendications 1 à 5 comme feuille d'emballage désintégrable par l'interaction de l'eau.

## Patentansprüche

1. Schichtenverbundprodukt bestehend aus wenigstens einem zusammenhängenden zweidimensionalen Träger und einer Verbindungsschicht aus einem wasserlöslichen Filmbildner zum Aufkleben des Trägers auf einen festen Körper, dadurch gekennzeichnet, dass das Produkt von innen nach aussen folgende miteinander verbundene Schichten aufweist:
- eine Schicht aus einer Hot-Melt-Zusammensetzung (28),
- eine Schicht aus einem wasserlöslichen Klebstoff (20),
- ein Blatt oder Band aus Papier (22), welches den Träger bildet,
- die wasserlösliche Verbindungsschicht (12) und
- eine dem festen Körper entsprechende Druckschicht (24), so dass das Produkt unter der Einwirkung von Wasser auflösbar ist.

2. Produkt nach Anspruch 1, dadurch gekennzeichnet, dass die Klebstoffschicht aus einem Kasein/Latex-Klebstoff oder aus einem Kaseinklebstoff besteht.

3. Produkt nach Anspruch 1 oder 2, dadurch gekennzeichnet, dass über der Druckschicht eine Lackschutzschicht (26) angebracht ist.

4. Produkt nach Anspruch 1 oder 2, dadurch gekennzeichnet, dass über der Druckschicht folgende Schichten angebracht sind:
- eine zweite wasserlösliche Verbindungsschicht (13),
- eine klebende Zwischenschicht (32) und
- ein durchsichtiger Film (34) aus Polymermaterial.

5. Produkt nach Anspruch 4, dadurch gekennzeichnet, dass die klebende Zwischenschicht (32) nicht wasserlöslich ist.

6. Verwendung des Produkts nach einem der Ansprüche 1 bis 5 als Etikettes, welche sich unter der Einwirkung von Wasser auflöst.

7. Verwendung des Produkts nach einem der Ansprüche 1 bis 5 als Verpackungsfolie, welche sich unter der Einwirkung von Wasser auflöst.

## Claims

1. Stratified composite product, composed at least of a continous bidimensional substrate and of a bonding layer of a water-soluble film former in order to affix the substrate to a solid body, characterised in that the product comprises the following layers, enumerated from the inside to the outside:
- a layer of a hot melt composition (28),
- a layer of a water-soluble adhesive (20),
- a sheet or strip of paper (22) which forms the substrate,
- the water-soluble bonding layer (12), and
- a printed layer (24) corresponding to the solid body,
such that the product is disintegratable under the action of water.

2. Product according to claim 1, characterised in that the adhesive layer is composed of a casein/latex adhesive or of a casein adhesive.

3. Product according to claim 1 or 2, characterised in that the printed layer is covered by a layer of protecting varnish (26).

4. Product according to claim 1 or 2, characterised in that the printed layer is covered by the following layers:
- a second water-soluble bonding layer (13),
- an intermediate adhesive layer (32), and
- a transparent film (34) of a polymer material.

5. Product according to claim 4, characterised in that the intermediate adhesive layer (32) is water-insoluble.

6. Application of the product according to any one of claims 1 to 5 as a label which is disintegratable under the action of water.

7. Application of the product according to any one of claims 1 to 5 as a packaging foil which is disintegratable under the action of water.
